# EUROPEAN PATENT APPLICATION

(11) **EP 4 563 865 A1**
(43) Date of publication of application: **04.06.2025**
(21) Application number: 23857246.5
(22) Date of filing: 14.08.2023
(51) Int. Cl.: F16L 15/04, C09D 7/63, C09D 201/08, C10M 129/28, C10N 30/06, C10N 30/12, C10N 40/00, C10N 50/02

(54) **OIL WELL PIPE, OIL WELL PIPE SCREW JOINT, AND COATING MATERIAL**

(30) Priority: 25.08.2022 JP 2022134377
(71) Applicant: JFE Steel Corporation, Tokyo 100-0011 (JP); Toyo Drilube Co., Ltd., Tokyo 155-0032 (JP)
(72) Inventor: KOGA, Takashi, Tokyo 100-0011 (JP); KAWAI, Takamasa, Tokyo 100-0011 (JP); GOTO, Seigo, Tokyo 100-0011 (JP); FUJIMOTO, Sachiko, Tokyo 100-0011 (JP); FUJISAWA, Kotaro, Tokyo 100-0011 (JP); SHODA, Koichi, Tokyo 155-0032 (JP); MATSUMURA, Kazuhide, Tokyo 155-0032 (JP); OKUBO, Akira, Tokyo 155-0032 (JP); KOBAYASHI, Ryota, Tokyo 155-0032 (JP); KUBO, Ryota, Tokyo 155-0032 (JP); TOYOSAWA, Kota, Tokyo 155-0032 (JP)
(74) Representative: Haseltine Lake Kempner LLP
(86) International application number: PCT/JP2023/029435
(87) International publication number: WO 2024/043133

(57) **Abstract**

Provided is a threaded joint for oil country tubular goods having a solid lubrication coating film having good lubricity and rust prevention. There are provided oil country tubular goods constituting a box (2) or a pin (1) used for a threaded joint for oil country tubular goods, the threaded joint formed by connecting the box (2) having a female thread and the pin (1) having a male thread, the oil country tubular goods including: a resin coating film containing an alkaline soap as a solid lubricant in a binder resin, as an outermost layer of a thread portion. The resin coating film has a surface on which an alkaline soap layer is formed.

## Description

### Technical Field

The present invention relates to oil country tubular goods including a thread portion to which lubricity and rust prevention are imparted by a solid lubrication coating film, a threaded joint for oil country tubular goods using the same, and a coating material for forming an outermost layer (topcoat layer) of a thread portion.

The coating material may be used for repairing a lubrication film formed on the thread portion for oil country tubular goods.

### Background Art

A technology for forming a wet lubrication film on a thread portion to perform make-up by coating a threaded joint for oil country tubular goods with a viscous lubricant called a compound has been generally used. Accordingly, this compound mainly contains heavy metals such as Pb and Zn**.**

Here, in recent years, environmental pollution has been regarded as a problem. Regarding lubrication of the thread portion, conversion to a lubricant not containing heavy metals has been advanced. However, as long as a wet lubricant is used, there are the following problems. For example, in a case of use in the desert, when sand that has been blown in adheres to the thread portion for oil country tubular goods, there is a risk of causing galling when the threaded joint is made up. In addition, in a case of use in a cold climate, there is a problem that the wet lubricant may freeze and it may be difficult to apply the lubricant.

In order to solve these problems, there is a technology of using a dry solid lubrication coating film not containing heavy metals for lubricating the thread portion for oil country tubular goods. Technologies for using the solid lubrication coating film for oil country tubular goods, for example, include technologies described in PTLs 1 to 3.

PTL 1 discloses a double coating film including a viscous liquid or semi-solid lubrication coating film and a dry solid coating film formed thereon. PTL 1 describes that such a configuration enables a threaded joint for oil country tubular goods to have not only rust prevention and galling resistance but also resistance to foreign matter adhesion. In addition, PTL 1 describes that at least a fatty acid alkaline-earth metal salt needs to be contained as a lubricant. In addition, PTL 1 describes that components selected from an organic resin, an oil, and an additive may be blended in to enhance uniform dispersibility of the fatty acid alkaline earth metal salt.

In PTL 2, a solid lubrication coating film having a high friction coefficient is formed on a part of a metal contact portion. In addition, in PTL 2, a viscous liquid lubrication coating film or a solid lubrication coating film having a low friction coefficient is formed on at least one of a surface of a portion other than a contact surface and a contact surface of a mating member. PTL 2 describes that large torque-on-shoulder resistance is realized by such a configuration. PTL 2 describes, as a preferable example of a viscous liquid lubrication coating film, a pine resin substance, a wax, a metal soap, and a basic aromatic organic-acid metal salt. In addition, in PTL 2, the metal soap is defined as a salt of a fatty acid with a metal other than alkali metals. Accordingly, PTL 2 describes that such a configuration is effective for enhancing a galling prevention effect and a rust prevention effect of a coating film.

PTL 3 describes that a lubrication coating film is formed by applying a lubrication coating film forming composition to a fitting surface of any one of a box and a pin constituting a threaded joint. The lubrication coating film forming composition is formed by dissolving one or more basic oils selected from basic sulfonates, basic salicylates, and basic phenates in a dissolving base. Accordingly, PTL 3 describes that good rust prevention and lubricity can be obtained by such a configuration. In addition, PTL 3 describes that a thermoplastic resin powder may be contained to further improve galling resistance. Moreover, PTL 3 describes that an alkaline earth metal salt or an alkali metal salt of a fatty acid may be contained as a diluting component of the basic oil.

Each of the above literature describes a solid lubrication coating film related to a threaded joint for oil country tubular goods.

On the other hand, solid lubrication technologies in other fields different from the field of the threaded joint for oil country tubular goods are described in, for example, PTLs 4 and 5.

PTL 4 discloses an invention relating to a lubricant that is used when a metal workpiece is subjected to wire drawing in a die. PTL 4 describes the following advantages of a dry wire drawing lubricant containing an alkali metal soap. That is, as a first advantage, it is described that a coating film having good lubricity is formed. In addition, as a second advantage, it is described that since the coating film is water-soluble, the lubricant can be easily removed before plating or heat treatment.

On the other hand, PTL 4 describes that the dry wire drawing lubricant containing an alkali metal soap has a drawback of liquefying when exposed to a high temperature, and thereby followability required for the lubricant and the spreadibility to a wire rod is reduced. On the other hand, PTL 4 describes that a certain amount of a metal soap or an alkaline soap of unsaturated fatty acids which easily causes an intermolecular polymerization reaction is also added to a metal soap or an alkaline soap of saturated fatty acids. This description is about severe wire drawing conditions at high temperature, high pressure, and high speed. Accordingly, PTL 4 describes that according to such a configuration, a dry wire drawing lubricant that exhibits lubricity, peeling resistance, heat resistance, and high-temperature spreadibility even under the severe conditions described above can be obtained. The lubricant described in PTL 4 is obtained by drying predetermined blended components. Accordingly, the lubricant is pulverized into a solid form, a powdery form, or a granular form and then put into a die box to be used.

In addition, PTL 5 discloses an invention related to a steel wire agent having a lubrication coating film on a surface thereof. PTL 5 describes that a composite film (chemical conversion coating film) including a zinc phosphate coating film and a soap layer has high machinability and corrosion resistance as one of conventional technologies. On the other hand, PTL 5 describes that a lubrication coating film not containing phosphorus has recently been required from the viewpoint of environmental conservation. Accordingly, PTL 5 describes that silicone, tungsten, and an alkali metal salt of a fatty acid are blended at a predetermined ratio. PTL 5 describes that, in such a configuration, a lubrication coating film having high machinability and corrosion resistance can be obtained even without phosphorus being contained. Here, an alkali metal salt of a fatty acid is blended for reducing friction of a lubrication coating film and preventing poor heading appearance. Accordingly, it is described that since the alkali metal salt is water-soluble, water evaporates to form a coating film. Accordingly, PTL 5 describes that the alkali metal salt is finely and uniformly precipitated at the time of forming a coating film, a local difference in wear state is less likely to occur, and a good heading appearance is obtained.

### Citation List

### Patent Literature

PTL 1: JP 2008-537062 A
PTL 2: JP 2013-108556 A
PTL 3: JP 2002-173692 A
PTL 4: JP 2009-132811 A
PTL 5: JP 2017-66515 A

### Summary of Invention

### Technical Problem

The inventors have obtained findings that, in make-up of a connection for oil country tubular goods at an actual well, a case where a pin connection is turned by a power tong is often observed in a state where the pin connection and the box connection do not sufficiently mesh with each other. Accordingly, the inventors have obtained findings that make-up is performed in the following two processes (steps), and galling resistance is reduced in a case of a solid lubrication coating film. That is, the solid lubrication coating film formed on a thread portion constituting a threaded joint is damaged by eccentricity or swinging of the oil country tubular goods at a stage where threads do not mesh with each other (Step 1). As a result, the inventors have found a phenomenon in which the galling resistance in a make-up process (Step 2) after the thread meshing is reduced.

Next, these findings will be supplementarily described.

Regarding the solid lubrication coating film considered to be used at an actual well, it is necessary to assume that the solid lubrication coating film is unavoidably scraped off to some extent at the time of make-up or break-out. The inventors have obtained findings that the scraped fragments in the related art cause galling problems in the related art. Therefore, the inventors have obtained findings that, unless lubricity of the solid lubrication coating film is evaluated at an actual well or by simulating conditions close to an actual well, the evaluation is meaningless at an actual well.

Here, in the related art, as a frequently used test, there is a make-up test in a laboratory using only a short pin having a length of about 1 m. In the make-up test, regarding a case of lubrication of the solid lubrication coating film which is a target of this disclosure, lubrication determined as NG is NG also at the actual well. However, even though an evaluation in the test using the short pin is determined as OK in the related art, the inventors have obtained a finding that the determination does not guarantee OK from an evaluation at the actual well.

Further, a wet viscous liquid-like lubrication compound does not have a significant difference between a make-up/break-out evaluation using a short pin in a laboratory and a situation at the actual well. The determination at the actual well tends to be made in accordance with the evaluation in the laboratory. This is to be assumed that the viscous liquid-like lubrication compound is effective to move in conjunction with the make-up at the time of make-up/break-out.

On the other hand, in the case of the solid lubrication coating film, fragments that have been unavoidably scraped off do not necessarily move in conjunction with the make-up/break-out. Therefore, at the actual well where many fragments are unavoidably produced, the fragments are likely to cause clogging. In addition, the inventors have obtained findings that when peeling occurs to a remarkable extent, galling occurs at a part where the solid lubrication coating film becomes thin or a part where the solid lubrication coating film disappears. Based on such findings, the inventors have found that, in the evaluation of the solid lubrication coating film, it is necessary to perform the evaluation based on such a point described above.

The findings will be described more specifically.

In the actual well, a situation in which a pin connection having an actual length is made up into a box connection is not implemented in an ideal state as described in a textbook. In an image in the ideal state, an actual size pin is envisaged to be fitted upright and made up straight into the box connection. However, this is not the case in practice. A structure of a connection for oil country tubular goods has an imperfect thread part in a state where the pin connection enters the box connection in an inserting manner. There are many cases where the pin is set slightly obliquely at the time of initial setting by a backlash (play, margin) of the part. Accordingly, at the beginning of the make-up of the connection, the pin connection has a touch around by the amount of play. Therefore, until the threads mesh with each other, the solid lubrication coating film is under superimposed loads of a pin weight (large load) and an unbalanced load for causing the pin to move eccentrically. Therefore, there is a high concern that the solid lubrication coating film may be abnormally scraped off unavoidably or thoroughly peeled off.

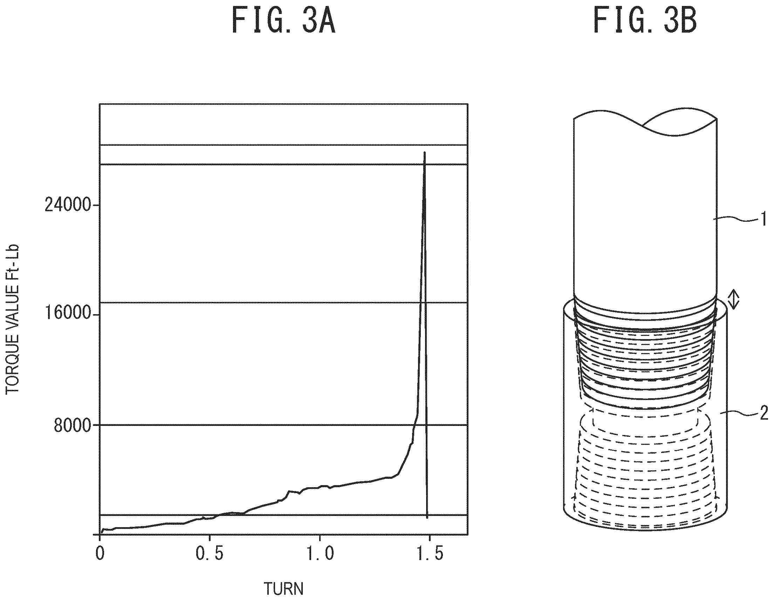

This is specifically illustrated in FIGS. 3A to 4B.

Examples illustrated in FIGS. 3A to 4B represent examples in which make-up/break-out test conditions are performed at 15 to 25 rpm until torque rises and at 2.5 to 1.5 rpm when the torque has risen. This is a result of testing under severe conditions (high turning speed) beyond the conditions defined in the instruction manual of the connection (make-up description in the technical package). The examples illustrated in FIGS. 3A to 4B represent an example of an evaluation of a solid lubrication coating film on a JFELION (trademark) connection made of a well make-up material of 9-5/8", 53.5# and a strength grade of Q125.

FIG. 3A is a torque-turn chart when make-up is performed using a short pin having a length of about 1 m with a vertical power tong based on a laboratory evaluation method in the related art. Since the pin is short, the pin can be easily handled and can be set straight. Therefore, the pin can be set by hand to a state in which pin crests are hardly exposed (FIG. 3B). In the torque-turn chart in this case, the torque starts to rise from the start of the make-up, and the make-up is performed beyond a bending point of a shoulder torque. That is, in this case, a very general chart is obtained (FIG. 3A). Here, the torque of the pin rises immediately, since the pin connection and the box connection sufficiently mesh with each other at the initial setting stage, and the make-up is performed from the preset position.

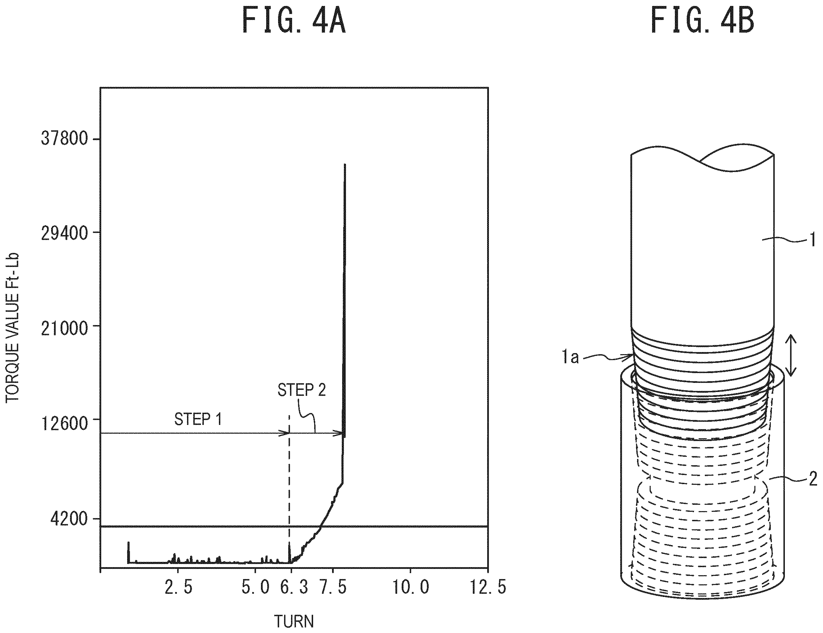

On the other hand, FIG. 4A is a torque-turn chart obtained in a case of using one actual size pin of Range-3, that is, 40 feet odd (12 m odd) and illustrates a result of a test conducted with a simulated well. Here, a unit (size) of the horizontal axis is different from that in FIG. 3A. Further, the simulated well is not a well from which oil and gas are actually produced but an experimental well that is simulatively bored so that three actual size pins odd can enter the well in an underground direction (downward). At the same time, the simulated well means a group of devices and an experimental facility in which there is a rig in which about 2 to 3 connected pins can be hung and set in an upper chamber, and a make-up/break-out test can be performed. This example tends to come into a state where the pin is set similarly to the setting at the actual well but is different from the case of FIGS. 3A and 3B of the short pin. In this example, steady torque does not rise until about 6.3 turns, and irregular rises of spike-like torque are occasionally observed during the turning. It has been found that such a phenomenon is directly linked to damage of the solid lubrication coating film and indicates that it is important to evaluate the solid lubrication coating film based on the finding.

An example of the torque chart of FIG. 4A occurs when the pin of Range-3, that is, 40 feet odd (12 m odd) is set and made up. In this case, since the actual size pin (about 12 m odd) is used, the pin cannot be set completely straight, and the pin is inserted very slightly obliquely in most cases. Further, this condition is similar to that in the case of the actual well. Therefore, even if the pin is set by hand, the pin connection and the box connection are partially abutted against each other too strongly. Therefore, five or more crests of the pin and, in many cases, about a half of the total crests, do not advance further by setting by hand in a state of being exposed from the box. From that state, make-up and insertion by a tong are started. Accordingly, the threads do not sufficiently mesh with each other, and some threads are inadvertently abutted strongly against each other and come into a state of not advancing any more in most cases. Therefore, until the threads of the actual size pin sufficiently mesh with each other, the box connection and the pin connection abut against each other in a state of being biased. That is, this means that damage is caused. In view of this, the present inventors have found that, as described above, unless the solid lubrication coating film is evaluated, the film determined as NG in the evaluation using the short pin is also determined NG at the actual well, but the film determined as OK in the evaluation using the short pin does not necessarily mean OK in the evaluation at the actual well. Therefore, in the past invention, it has been found that a film evaluated based on OK in an evaluation using a short pin is not necessarily intended to be in a favorable range at an actual well, in the upper/lower limit definition of components, conditions, and other parameters.

All of PTLs 1 to 3 relate to a solid lubrication technology for a threaded joint for oil country tubular goods. However, PTLs 1 to 3 are assumed to be examples tested and evaluated using a short pin. Therefore, PTLs 1 to 3 have potential for improvement in reduction in damage of a solid lubrication coating film in Step 1.

On the other hand, PTLs 4 and 5 relate to a method of using a solid lubricant in the technical field other than the oil country tubular goods field and relate to application to lubrication to plastic processing of a metal. That is, PTLs 4 and 5 do not describe any diversion to the oil country tubular goods field.

Here, in PTL 4, a metal soap or an alkaline soap is employed as a solid lubricant. However, a technology of PTL 4 assumes that a lubricant is formed into a solid form, a powdery form, or a granular form, and the lubricant is applied to a dry use environment for use. Therefore, the technology of PTL 4 is not intended to be used for a connection for oil country tubular goods at all. For example, even when the solid lubricant described in PTL 4 is applied to a vertically erected connection for oil country tubular goods, the solid lubricant falls and is not held on a surface of a thread portion.

In addition, in PTL 5, a predetermined chemical solution is applied to a steel material, and a lubrication coating film containing an alkaline soap is formed on a surface of a steel material by evaporating water which is a solvent. However, when this is applied to the make-up work of a connection for oil country tubular goods, the following problems arise. That is, the water-soluble alkaline soap on a thread portion for oil country tubular goods is easily washed away by rainfall or backflow of muddy water from the inside of a well. As a result, in the oil country tubular goods field, lubricity cannot be maintained by the method described in PTL 5.

Moreover, the connection for oil country tubular goods is required to have high corrosion resistance for preventing rust even during outdoor storage for several years. However, it is generally recognized that the alkaline soap is generally not preferred in terms of corrosion resistance because the alkaline soap absorbs water due to the deliquescence. However, in reality, PTL 4 does not require rust prevention. In addition, PTL 5 requires only rust prevention for withstanding indoor storage for just two months.

The invention focuses on the above-described points, and an object of the invention is to provide a threaded joint for oil country tubular goods having a solid lubrication coating film having good lubricity and rust prevention.

### Solution to Problem

As found by the inventors, in make-up of the threaded joint for oil country tubular goods, backlash, that is, eccentricity or swinging of the oil country tubular goods occurs at a stage (Step 1) where pin and box connections do not mesh with each other. This backlash causes damage to a solid lubrication coating film formed on the thread. The inventors have obtained findings that it is effective to form an alkaline soap layer directly on a thread surface of at least one of a pin or a box or on the solid lubrication coating film to suppress this damage.

Here, the alkaline soap in this disclosure refers to a salt composed of a fatty acid and an alkali metal such as sodium or potassium. The alkaline soaps of this disclosure are distinguished from metal soaps which are made of fatty acids and metal salts other than alkali metals.

In the related art, when a soap is used as a solid lubricant of a threaded joint for oil country tubular goods, a metal soap is used, and the alkaline soap has not attracted attention. This is because, as described above, the alkaline soap is water-soluble and inferior in waterproof property and rust prevention. In addition, this is because the metal soap is more easily dispersed in a common binder resin.

However, the inventors have obtained findings that an alkaline soap layer is formed on a surface layer of a resin coating film by intentionally adding an alkaline soap to a solvent in which a resin is dissolved, and this is effective for reducing the above-described backlash. Accordingly, the inventors have made the invention based on this findings.

Accordingly, in order to solve the problems, one aspect of the invention is made based on the gist that there are provided oil country tubular goods constituting a box or a pin used for a threaded joint for oil country tubular goods, the threaded joint formed by connecting the box having a female thread and the pin having a male thread, the oil country tubular goods including: a resin coating film containing an alkaline soap as a solid lubricant in a binder resin, as an outermost layer of a thread portion. The resin coating film has a surface on which an alkaline soap layer is formed.

In addition, another aspect of the invention is made based on the gist that there is provided a threaded joint for oil country tubular goods, the threaded joint formed by connecting a box having a female thread and a pin having a male thread, in which at least one of the box and the pin is made of the oil country tubular goods of the one aspect of the invention.

### Advantageous Effects of Invention

According to one aspect of the invention, a resin layer in which an alkaline soap is dispersed is formed on a surface side as an outermost layer of a thread portion for oil country tubular goods, and thereby it is possible to provide the threaded joint for oil country tubular goods having a solid lubrication coating film having good lubricity and rust prevention with a simple configuration.

### Brief Description of Drawings

FIG. 1 is a view illustrating oil country tubular goods and a threaded joint for the oil country tubular goods;
FIGS. 2A and 2B are respective cross-sectional views illustrating a configuration example of a lubrication coating film formed on a thread portion;
FIG. 3A is an example of a make-up chart in a laboratory test in the related art, and FIG. 3B is a view illustrating an example of an initial set position at that time;
FIG. 4A is an example of a make-up chart at an actual well, and FIG. 4B is a view illustrating an example of an initial set position at that time;
FIGS. 5A and 5B are schematic graphs illustrating make-up charts, in which FIG. 5A illustrates a case of the actual well and FIG. 5B illustrates a case of a laboratory test in the related art;
FIG. 6 is a view for explaining a condition (weight tong) of a new laboratory test; and
FIG. 7 is a view illustrating an installation example of a weight under conditions (weight tong) of a new laboratory test.

### Description of Embodiments

Hereinafter, embodiments of the invention will be described with reference to the drawings.

This disclosure relates to a coating film structure formed on a tightening surface of a thread portion for oil country tubular goods used for actual oil/gas, and a threaded joint for oil country tubular goods having the coating film structure as a lubrication coating film. This embodiment has one of features in a solid lubrication coating film formed on a tightening surface of the threaded joint.

However, this disclosure is not particularly limited with respect to structure itself of the threaded joint. A known or novel structure may be employed as the structure of the threaded joint.

### <Oil country tubular goods and threaded joint for oil country tubular goods>

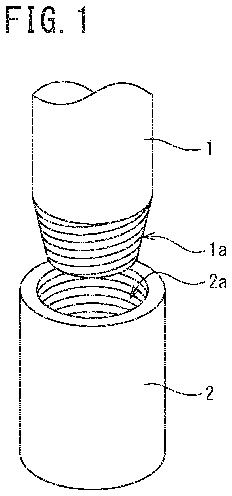

The oil country tubular goods include, for example, a box 2 such as a coupling and a pin 1 as illustrated in FIG. 1.

As illustrated in FIG. 1, the threaded joint for oil country tubular goods is configured of the box 2 such as a coupling having the female thread 2a and a pin 1 having the male thread 1a.

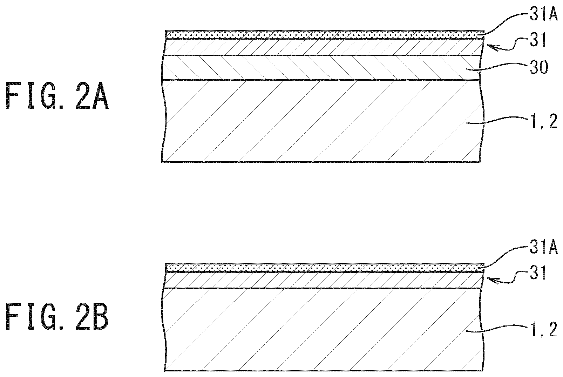

Accordingly, in this embodiment, a resin coating film based on this disclosure is formed on the outermost surface of a contact surface (tightening surface) of a thread portion in at least one part of the box 2 and the pin 1 (see FIGS. 2A and 2B).

Here, a resin coating film 31 of this embodiment constitutes a film of the outermost layer when the lubrication coating film is configured of a plurality of layers with respect to the thread portion. That is, as illustrated in FIGS. 2A and 2B, when the lubrication coating film has a multilayer film structure, the resin coating film 31 of this embodiment is not applied to a film inside the outermost layer (see FIG. 2A). In FIG. 2A, reference numeral 30 denotes another solid lubrication coating film, a base layer, or the like formed as an underlayer with respect to the resin coating film 31. There may be a plurality of lubrication films as an underlayer with respect to the resin coating film 31.

A main object for forming the resin coating film 31 of this disclosure is to reduce backlash in Step 1 described above. It is assumed that the lubricity in Step 2 depends on the other solid lubrication coating film. For this reason, in this embodiment, it is assumed that the other solid lubrication coating film is formed on one or both of the pin connection or the box connection. Accordingly, for example, the resin coating film 31 of this disclosure is formed on any one solid lubrication coating film of other formed solid lubrication coating films.

Alternatively, when the other solid lubrication coating films are formed on only one of the pin connection and the box connection, the resin coating film 31 of this disclosure is formed on the thread surface on which the other solid lubrication coating films are not formed.

However, the resin coating film 31 of this disclosure can also be directly formed on a surface of a thread portion for oil country tubular goods and used simply as a rust preventive film for the pin connection or the box connection. In addition, for repair or surface protection, a coating material for forming the resin coating film 31 of this disclosure may be applied to form the resin coating film 31 as a topcoat layer.

### <Coating material>

The coating material for forming the resin coating film 31 of this embodiment is obtained by dissolving an alkaline soap as a solid lubricant and a binder resin in an organic solvent. This coating material is applied to the thread portion constituting the threaded joint for oil country tubular goods. Thereafter, the resin coating film 31 can be obtained by drying a coating liquid while heating is performed, as necessary.

### <Organic solvent>

As the organic solvent, an organic solvent other than a lower alcohol (having 5 or less carbon atoms) is selected. This is because when the lower alcohol is selected, affinity with a binder resin to be described below is poor, and a homogeneous resin coating film 31 is not formed.

A type of organic solvent to be used is not particularly limited as long as the organic solvent is other than the lower alcohol. However, regarding both application performed at a production line of the connection for oil country tubular goods at which high productivity is necessary and application performed during make-up work for country tubular goods at a well, an organic solvent to be used is preferably a solvent having a quick drying property and high volatility. Specifically, the organic solvent to be used is preferably a material having a boiling point of 60°C or lower.

In addition, in consideration of safety at a well in formation of the resin coating film 31, it is desirable that the flash point is high. Specifically, the organic solvent to be used is preferably a material having a flash point of 60°C or higher.

Examples of the solvent satisfying these conditions include a fluorine-based solvent. Examples of fluorine-based solvent include so-called chlorofluorocarbon substitute solvents, that is, a hydrofluorocarbon (HFC) solvent, a hydrofluoroether (HFE) solvent, a hydrofluoroolefin (HFO) solvent, a perfluorocarbon (PFC) solvent, and the like.

### <Binder resin>

The binder resin serves to hold the alkaline soap, which serves as a solid lubricant, on the threads for oil country tubular goods. Consequently, this prevents the alkaline soap contained in the formed resin coating film 31 from flowing out, even when the oil country tubular goods are erected vertically or comes into contact with running water.

In addition, when the solid lubricant is dissolved and dispersed in the binder resin, generally, homogeneous dissolution and dispersion are intended. Therefore, a material having high affinity with the solid lubricant, that is, a material having a similar solubility parameter is usually selected as the binder resin.

On the other hand, in this embodiment, a binder resin having low compatibility with the alkaline soap is intentionally selected. As a result, when the coating material is applied, the alkaline soap is concentrated on the surface side, that is, the alkaline soap automatically floats on the surface side, and thereby an alkaline soap layer 31A having a high lubrication effect can be formed on a coating film surface.

From this viewpoint, in this embodiment, a binder resin having a solubility parameter of 10.0 cal/cm³ or less is used as the binder resin.

Here, the binder resin includes not only a single resin but also a composite resin. Even in the same kind of resin, since the solubility parameter varies depending on a molecular weight and the type and number of functional groups, it cannot be said that any resin satisfies the above-mentioned solubility parameter. Examples of the resin having a relatively low solubility parameter include a fluororesin, polyethylene, or the like.

In addition, when the solubility parameter of the binder resin is 10.0 cal/cm³ or less, the hydrophobicity and water resistance of the resin itself are enhanced, and the rust prevention is also improved.

The binder resin preferably has high water repellency.

Conversely, when the solubility parameter of the binder resin exceeds 10.0 cal/cm³, the rust prevention of the resin itself deteriorates, and the alkaline soap having deliquescence is easily dispersed in the resin below the alkaline soap layer 31A. As a result, sufficient rust prevention properties cannot be obtained in the binder resin.

Here, the lower limit value of the solubility parameter of the binder resin is not particularly limited, but is, for example, 5.0 or more.

Here, when the molecular structure is known, the Fedors method may be used to calculate the solubility parameter. When the molecular structure is unknown, a turbidimetric titration method may be used.

Moreover, the binder resin desirably has an average molecular weight of 10,000 or more and 300,000 or less. When the average molecular weight is too much lower than 10,000, the affinity with the alkaline soap is increased, and it becomes difficult to obtain the stable alkaline soap layer 31A with respect to the surface layer. On the other hand, when the average molecular weight is too much higher than 300,000, the hardness of the resin is increased, it becomes difficult to uniformly apply the coating material to the thread surface, and the lubrication effect of the alkaline soap in Step 1 described above may be inhibited.

### <Alkaline soap>

In this embodiment, an alkaline soap is used as the solid lubricant.

The alkaline soap in this disclosure refers to a salt composed of a fatty acid and an alkali metal such as sodium or potassium. That is, the alkaline soaps in this specification do not include metal soaps which are made of fatty acids and metal salts other than alkali metals.

The kind of fatty acid constituting the alkaline soap is not particularly limited. Typical examples of the fatty acid include stearic acid, palmitic acid, myristic acid, lauric acid, behenic acid, octanoic acid, oleic acid, linoleic acid, linolenic acid, ricinoleic acid, 12-hydroxystearic acid, and the like.

In addition, in this disclosure, the alkali metal constituting the alkaline soap is substantially only sodium and potassium.

Other alkali metals exist, but usually are not available in the form of an alkaline soap, or have a property similar to that of an alkaline earth metal (metal soap as a salt with a fatty acid) like lithium. These alkali metals are not included in the alkali metals constituting the alkaline soap in this specification. That is, examples of the alkali metals include lithium, rubidium, and cesium, but salts of these alkali metals are not included in the soap (alkaline soap) of this disclosure.

Practically, alkaline soaps of rubidium and cesium are hardly available, and therefore, this is not realistic. In addition, since a lithium soap is used as a thickener in grease rather than as a cleansing element like sodium or potassium, the lithium soap itself is not used for application to lubrication.

A weight of the alkaline soap is preferably 0.01 times or more and 3 times or less of a weight of the binder resin.

Since the alkaline soap is concentrated on the surface layer of the resin coating film 31 of this embodiment, the resin coating film 31 exhibits higher lubrication performance than other lubricants, thereby reducing damage of the coating film due to the occurrence of backlash before the threads for oil country tubular goods mesh with each other.

In order to exhibit this effect, the alkaline soap is added preferably by at least 0.01 times the weight of the binder resin. On the other hand, when the amount of the alkaline soap is too much, the formation of the homogeneous resin coating film 31 is hindered, and the rust prevention may deteriorate. Therefore, the upper limit of addition of the alkaline soap is preferably 3 times the weight of the binder resin. Further, the weight of the alkaline soap is more preferably 0.1 times or more and 2 times or less the weight of the binder resin.

### <Other Additives>

The coating material for forming the resin coating film 31 of this embodiment may contain an additive other than the alkaline soap for the purpose of, for example, improving lubricity and rust prevention.

For example, by adding PTFE, a metal soap, black lead, or the like as another solid lubricant, the galling resistance exhibited after the threads for oil country tubular goods mesh with each other may be enhanced. In this case, it is preferable to employ, as the other solid lubricant, one having a solubility parameter lower than that of the alkaline soap or one having a mass heavier than that of the alkaline soap, and to employ a solid lubricant in which the other solid lubricant is not concentrated on the surface layer side of the resin coating film 31.

Alternatively, zinc phosphate or aluminum phosphate may be added as a rust inhibitor to further enhance corrosion resistance in long-term storage.

### <Coating Method>

A method for applying the coating material of this embodiment to the thread portion for oil country tubular goods is not particularly limited. Examples of the coating method include spray coating, brush coating, immersion, and the like. Spray coating is preferred to form a homogeneous coating film. In addition, it is preferable to rotate the oil country tubular goods at a constant speed both during application and during drying.

As a result, the resin coating film 31 based on this disclosure is formed.

In the resin coating film 31, as illustrated in FIGS. 2A and 2B, the alkaline soap is concentrated on the surface side, and as illustrated in FIGS. 2A and 2B, an alkaline soap layer 31A is formed on the surface.

In this embodiment, "the alkaline soap is concentrated on the surface side" indicates that 70 wt.% or more of the alkaline soap contained in the resin coating film 31 is located on the upper half side (surface side) of the resin coating film 31. It is preferable that 90 wt.% or more is located on the upper half side (surface side) of the resin coating film 31. As described above, the alkaline soap contained in the binder resin is concentrated and dispersed on the surface side to form the alkaline soap layer 31A.

As a method of concentrating the alkaline soap on the surface side, it is preferable to rotate the coated oil country tubular goods at a constant speed when the coating material for the resin coating film 31 is applied, or the coating material is dried, in addition to adjusting the solubility parameter of the binder resin. In order to obtain the stable alkaline soap layer 31A, natural drying is more preferable than forced drying.

Further, the concentration of the alkaline soap on the surface side can be confirmed by, for example, quantification of the alkali metal in the alkaline soap using energy dispersive X-ray analysis (EDX). This can be confirmed by the distribution of the alkaline soap in a film thickness direction. This confirmation is performed, for example, by cutting out any film thickness cross section in the thread portion after the film is formed, and measuring the concentration of the alkali metal (sodium or calcium) at equal intervals in the film thickness direction using EDX. Accordingly, this confirmation is determined, for example, by calculating an average concentration of the upper half of the film thickness with respect to an average concentration of the entire film thickness.

### <Hardness of resin coating film 31>

The resin coating film 31 formed by the above-described method is preferably soft with a pencil hardness of F or less. The hardness of the resin coating film 31 is mainly determined by the binder resin.

It is considered that by providing such a soft resin coating film 31, the film is appropriately scraped off at a stage where backlash occurs before the threads for oil country tubular mesh with each other, and the lubricity of the alkaline soap layer 31A is exhibited.

The pencil hardness of the resin coating film 31 is more preferably 3B or less. Further, the pencil hardness of the resin coating film 31 also includes 6B or less.

Conversely, if the pencil hardness of the resin coating film 31 is too high, the backlash reducing effect may not be obtained. Moreover, there is a risk that the resin coating film 31 peeled off by make-up of the connection is not finely divided and causes clogging, and thus galling occurs.

Here, the pencil hardness is measured in accordance with JIS K 5600-5-4. In addition, the pencil hardness of the resin coating film 31 can be adjusted mainly by changing the average molecular weight of the binder resin.

### <Film thickness of resin coating film 31>

The film thickness of the formed resin coating film 31 is preferably in a range of 3 µm or more and 50 µm or less. If the film thickness is too much thinner than 3 µm, sufficient lubricity and rust prevention cannot be obtained. On the other hand, when the film thickness is too much thicker than 50 µm, redundant cutting residue is generated during connection make-up, which may cause galling of the thread.

### (Operation and others)

As described above, the lubricating behavior of the connection for oil country tubular goods can be roughly divided into the following two steps.

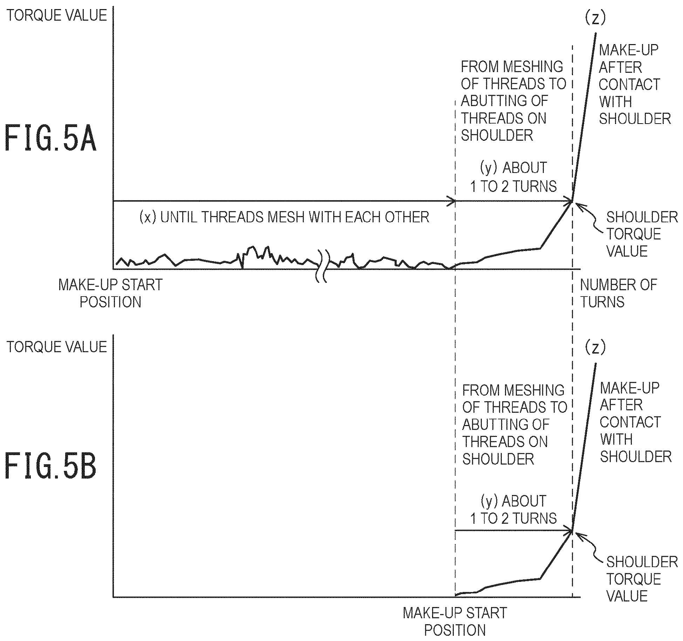

Step 1: A stage from when a pin connection is inserted into a box connection to when the threads mesh with each other. This corresponds to an (x) region of FIG. 5A when there is the initial rattling in Step 1 of FIG. 4A.

Step 2: After the threads mesh with each other, the threads are brought into strong contact with each other to be tightened.

In a loosening process, this is reversed, and the process can be roughly divided into a stage (Step 2) in which the threads are loosened from the stage in which the threads are in strong contact with each other and the meshing of the threads ends, and a stage (Step 1) in which the pin connection and the box connection have play (backlash) without strong meshing with each other to be loosened.

Accordingly, in the make-up of the threaded joint for oil country tubular goods, backlash, that is, eccentricity or swinging of the oil country tubular goods occurs at a stage (Step 1) where pin and box connections do not mesh with each other. This backlash causes damage to a solid lubrication coating film formed on the thread.

In contrast, in this embodiment, in order to control damage, the resin coating film 31 having the alkaline soap layer 31A as a surface layer is formed directly on the thread surface or on the solid lubrication coating film on the thread surface of at least one of the pin or the box to suppress damage. Accordingly, the alkaline soap layer 31A suppresses damage to the solid lubrication coating film at a stage (Step 1) where the connections of the pin and the box do not mesh with each other. That is, in this disclosure, when "play" occurs in Step 1 until the threads mesh with each other, the alkaline soap in the surface layer of the resin coating 31 ensures "lubrication" such that the threads "slide" into stable positions of the threads. That is, the alkaline soap has an action of enhancing the total lubrication by supporting sliding lubrication for guiding the threads to respective positions close to the original meshing positions at the time of make-up in a rattling state in which the threads for oil country tubular goods approach each other at the make-up initial stage.

Accordingly, when the other solid lubrication coating film 30 formed on both the threads or one of the threads is not damaged at the time of make-up in a region where initial thread rattling occur, the lubrication characteristics originally provided as an ability can be exhibited as it is. As a result, the number of times of make-up/break-out can be stabilized.

Here, in the related art, a metal soap is used as a solid lubricant of a threaded joint for oil country tubular goods, and the alkaline soap has not attracted attention. This is because the alkaline soap is water-soluble and has poor waterproof property and rust prevention. In addition, this is because the metal soap is more easily dispersed in a general binder resin.

However, in this embodiment, it has been found that the alkaline soap layer 31A is formed as a surface layer of the resin coating film 31 by intentionally adding the alkaline soap to a solvent in which a resin has been dissolved, and this is effective to reduce the above-described backlash. This effect is particularly effective when the weight of the alkaline soap contained in the resin coating film 31 is 0.01 times or more and 3 times or less the weight of the resin constituting the resin coating film 31.

Consequently, in a make-up process (Step 2) after the threads mesh with each other, the other solid lubrication coating film 30 can exhibit sufficient galling resistance.

On the other hand, even when a metal soap is added to the solvent in which the resin has been dissolved, instead of the alkaline soap, a stable metal soap layer is not formed on the surface of the resin film, and the effect of reducing backlash is also limited. In addition, the binder resin functions as a binder for the alkaline soap. Therefore, even when the oil country tubular goods are erected vertically after the coating material is applied, or even when the oil country tubular goods are exposed to rainfall or backflow of muddy water, it is possible to suppress the alkaline soap layer 31A from peeling off or flowing away.

Moreover, by selecting a resin having an solubility parameter of 10.0 cal/cm³ or less as the binder resin, the stable alkaline soap layer 31A can be formed as the surface layer of the resin film, and rust prevention suitable for the oil country tubular goods can also be obtained. Here, when the solubility parameter of the binder resin is too high, the affinity of the resin with alkaline soap or water increases, and the alkaline soap is dispersed in the resin film. In this case, the deliquescence of the entire film is increased, and rust is induced.

In addition, the inventors have found that, when the resin coating film 31 is too hard, that is, the pencil hardness thereof exceeds F, the above-described backlash suppressing effect may not be sufficiently obtained, even when the alkaline soap is added. It is presumed that this is because the binder resin supporting the alkaline soap layer 31A becomes too strong and hinders slippage of the alkaline soap layer 31A. Alternatively, since entanglement between polymers in the resin is strong, molecules of the alkaline soap hardly move to the surface layer, and a stable alkaline soap layer 31A may not be obtained.

### (Other applications)

As described above, the resin coating film 31 of the embodiment is formed by applying and drying the coating material obtained by dissolving the alkaline soap and the binder resin in the organic solvent. Therefore, it is very easy to form a coating film of the resin coating film 31. Therefore, in a case of damage to the resin coating film 31 or another lubrication coating film that has already been formed, a repair process of applying the coating material of this embodiment to the damaged portion and drying may be executed. In this case, it is also possible to repair the coating film, and eventually repair lubricity and anticorrosion properties.

### (Other examples)

This disclosure can also have the following configurations.
(1) There are provided oil country tubular goods constituting a box or a pin used for a threaded joint for oil country tubular goods, the threaded joint formed by connecting the box having a female thread and the pin having a male thread, the oil country tubular goods including: a resin coating film containing an alkaline soap as a solid lubricant in a binder resin, as an outermost layer of a thread portion, in which the resin coating film has a surface on which an alkaline soap layer is formed.
(2) The resin coating film includes the alkaline soap layer made of the contained alkaline soap which has become concentrated on the surface side.
(3) The binder resin has an solubility parameter of 10.0 cal/cm³ or less.
(4) A weight of the alkaline soap is 0.01 times or more and 3 times or less a weight of the binder resin.
(5) The resin coating film has a pencil hardness of F or less.
(6) Another solid lubrication coating film is provided as an underlayer with respect to the resin coating film.
(7) In addition, there is provided a threaded joint for oil country tubular goods, the threaded joint formed by connecting a box having a female thread and a pin having a male thread, in which at least one of the box and the pin is made of the oil country tubular goods of the one aspect of the invention.
(8) There is provided a coating material for forming an outermost layer on a thread portion for oil country tubular goods, the coating material including: a solvent; a binder resin; and a solid lubricant, in which as the solid lubricant, an alkaline soap is added, the binder resin has an solubility parameter of 10.0 cal/cm³ or less and an average molecular weight of 10,000 or more and 300,000 or less, and a weight of the alkaline soap is 0.01 times or more and 3 times or less a weight of the binder resin.

### [Examples]

Next, examples will be described based on this embodiment.

### (Regarding laboratory test method)

The condition of the laboratory test in the related art indicates a method of using a short pin having a length of about 1 m with a vertical power tong. In addition, in the related art, a made-up position reached by performing the make-up as much as possible by hand was used as a test start position.

On the other hand, in the following examples, a new laboratory test condition is employed in which a weight is placed on an upper portion of a short pin having a length of about 1 m, and a make-up/break-out test is performed by a vertical power tong. As the weight, a weight equivalent to 1 to 3 pins at an actual well was employed. The reason is as follows. An environment that occurs at an actual well which is targeted by this disclosure means that most of evaluation results are passes in an example using a short pin, and thus a true meaning of pass/fail cannot be sorted out. This is because even in the condition of pass determination, determination of the pass is changed to NG when the condition is used at a well, in many cases.

Again in this disclosure, as described above (see, for example, FIGS. 2A and 2B), phenomena caused by lubrication of the thread for oil country tubular goods are considered to be divided into the two flowing situations. That is, the inventors have obtained findings that it is important to evaluate thread lubrication including make-up/break-out (lubrication) in the first stage (Step 1) and lubrication in the second stage (Step 2). When the evaluation is not performed in consideration of these two stages, although the result is OK in the laboratory evaluation, problems may frequently occur at the actual well.

Under the new laboratory test condition, it is possible to simulate and evaluate this two-stage lubrication that can occur at an actual well, and it is possible to clarify the meaning of the upper and lower limits defined by this disclosure.

The two-stage lubrication includes two steps of a stage (Step 1) of (x) and a stage (Step 2) of (y) + (z) in FIG. 5A. At an actual well, an initial set is not made up until a level at which the crests completely mesh with each other, but fast make-up is performed at about 5 to 20 rpm by power tong. Since a situation where a large load of a full length pin (40 feet ≈ 12 m) is loaded to the box connection and meshing of the threads do not simultaneously occur, backlash occurs. Accordingly, the pin connection and the box connection may be locally abutted against each other, and thereby the solid lubrication coating is considerably damaged. This is the stage of Step 1. Since a clear torque is generated, a make-up speed is lowered to about 0.5 to 3 rpm although the make-up speed varies depending on a thread type, and the make-up is performed until complete make-up. This is Step 2. The break-out follows a reverse process to that.

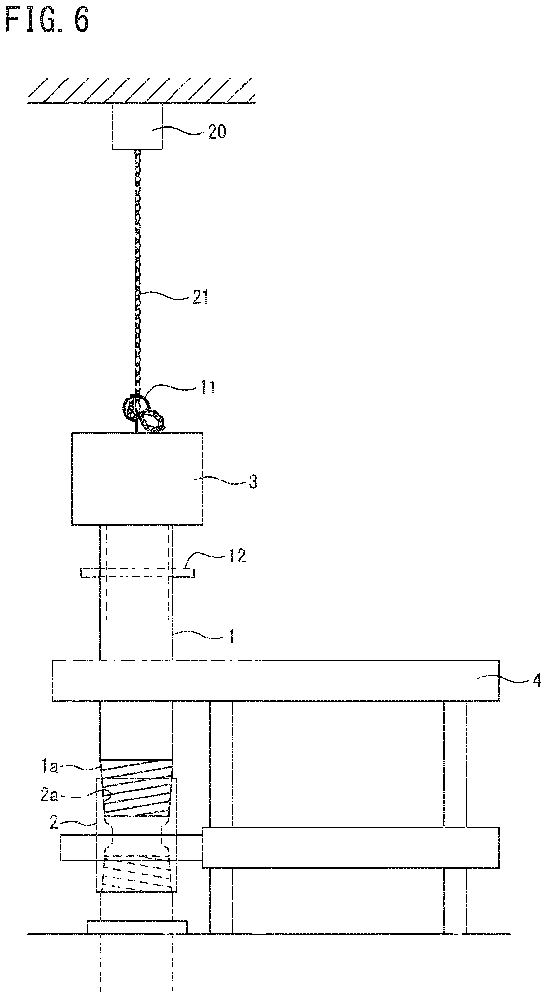

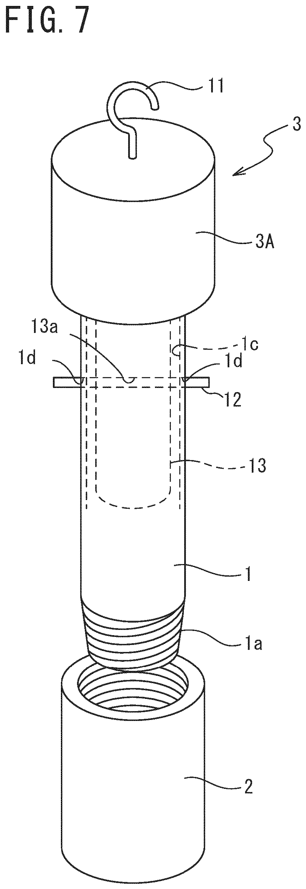

A test device for simulating an actual well for implementing conditions of a new laboratory test will be described with reference to FIGS. 6 and 7.

In the conditions of the new laboratory test, evaluation is basically performed under conditions of a large load at the time of the make-up and an unbalanced load at the time of the make-up/break-out as the feasible conditions. For example, in a case of a process in which a large load equivalent to an actual size pin is applied and the threads are made up, rattling until the threads mesh with each other is considered. In addition, in a case of a process of loosening the threads, rattling from release of the threads is reflected.

Under the conditions of the new laboratory test, a vertical power tong 4 is used as illustrated in FIG. 6. In addition, the short pin 1 is employed as a test pin. However, it is possible to load a load to an upper portion of the pin 1 by a weight 3 and remove the load.

Accordingly, the short pin 1 and the box 2 are made up by the pin connection 1a and the box connection 2a.

At this time, in order to simulate a situation where the crests do not mesh with each other, an initial temporary make-up position is set such that half of the total number crests of the pin connection 1a are exposed from the box connection 2a (see FIG. 4B). This is one of the causes of rattling. The make-up is started from that state.

In addition, at the time of the make-up, the weight 3 is attached to an end portion of the pin 1 on the side opposite to a make-up thread with respect to the box connection 2a.

A weight of the weight 3 is placed by being calculated as a load equivalent to one to three actual length pins, based on an actual size pin having an outer diameter and a wall thickness of the pin.

As illustrated in FIG. 7, the weight 3 illustrated in FIG. 6 includes a main weight body 3A and an insertion rod 13. The insertion rod 13 is joined to an underside of the main weight body 3A by welding and is disposed at an axisymmetric position of the weight 3. By inserting the insertion rod 13 into the pin 1 in a loosely inserted state, the weight is attached to the pin. Reference numeral 1c denotes an inner diameter surface of the pin 1.

When the weight 3 is attached to the insertion rod 13 and the pin 1 in advance as described above, holes 1d and 13a penetrating the pin 1 and the insertion rod 13 are formed in advance. Accordingly, as illustrated in FIG. 7, the weight 3 and the pin 1 are integrated by inserting a penetration rod 12 into the holes 1d and 13a.

A swivel hook 11 is welded to an axial center position of an upper portion of the weight 3 and has a suspended structure from a ceiling suspension device 20 via a suspension chain 21. As a result, a magnitude of the load of the weight on the pin can be adjusted by adjusting a suspension level of the weight by the suspension device 20.

Accordingly, at the time of make-up, a weight load is applied to the box connection in a state where the suspension chain 21 is loosened, and the make-up is performed until torque rises at 5 to 20 rpm (Step 1). This is a simulation of the rattling. Once the torque has risen, a turning speed is reduced to 0.5 to 2 rpm and the make-up is performed to reach the make-up position (Step 2).

On the other hand, at the time of loosening (break-out), the weight 3 is lifted by the suspension device 20, and the break-out is performed in a state where the load of the weight 3 is not applied. Regarding the turning speed, when the torque rises, the turning speed starts to decrease to 0.5 to 2 rpm. Accordingly, when the torque reaches about 1/10 of a make-up torque value, the torque is loosened to high-speed turning of 5 to 20 rpm.

As a result, this makes it possible to perform a laboratory test under the conditions close to those of an actual well.

### (Regarding threaded joint for oil country tubular goods)

As oil country tubular goods, a main pipe body (pin) having an outer diameter of 244.48 mm, a wall thickness of 13.84 mm, and a steel type of API 5CT Q125, and a coupling (box) corresponding thereto were prepared. For the threaded joint, a premium joint for oil country tubular goods having a thread pitch of 5.08 mm was used.

In addition, the resin coating film 31 according to this disclosure or a resin coating film 31 as a comparative example was formed on the pin connection. On the box connection, a solid lubrication coating film made of PTFE as a main component, which is different from the resin coating film 31 of this disclosure, was formed.

Accordingly, a make-up/break-out test was performed under the conditions of the new laboratory test described above, and the galling resistance was evaluated. At this time, hand tight was stopped in a state where eight ridges of the pin connection protruded from the box, and moreover, a weight having a weight of 3 ton (about 3 pipes having the same size of 12 m) was placed on the pin connection pipe, thereby intentionally generating backlash in Step 1.

### (Evaluation: Number of times of make-up/break-out)

The evaluation of each threaded joint was performed based on the number of times of make-up/break-out without occurrence of galling at an unrepairable level. Accordingly, when the number of times of make-up/break-out was five times or more, it was determined as a pass.

In accordance with the API 5C5 standard, it is not necessary to apply the half hand tight and the weight as described above, and in the case of the size of the oil country tubular goods used in this embodiment, if the make-up/break-out can be performed three times without galling, it is determined as a pass. However, here, in order to pursue higher galling resistance, the pass level was made strict. Further, when the number of times of make-up/break-out reached ten times, the test was terminated regardless of whether or not galling occurs.

### (Evaluation: Rust prevention)

In addition, apart from the above test, a cut sample of a pin thread portion of a main pipe body having an outer diameter of 88.90 mm**,** a wall thickness of 6.45 mm**,** and a steel type API 5CT L80 was also prepared.

As the pin connection, a premium joint for oil country tubular goods having a thread pitch of 4.23 mm was employed, and the resin coating film 31 of this disclosure or the resin coating film 31 as a comparative example was formed on the thread surface to prepare each sample.

Regarding these samples, a salt water spray test specified in JIS K 5600-7-1 was performed for eight hours, and whether or not rust was generated was confirmed to evaluate the rust prevention.

Here, no rust was defined as five points, slight rust (area ratio of 1% or less) was defined as four points, the small rust (area ratio of more than 1% and 10% or less) was defined as three points, large rust (area ratio of more than 10% and 50% or less) was defined as two points, and the presence of rust (area ratio of more than 50%) was defined as one point, and four or more points were regarded as a pass.

Table 1 provides the test conditions and evaluation results.

**[Table 1]**

| | Solid lubricant | Binder resin | | Solvent | P/B | Pencil hardness | Number of times of make-up/break-out | Rust prevention |
|---|---|---|---|---|---|---|---|---|
| | | Name | Solubility parameter | | | | | |
| Example 1 | Sodium stearate | Saturated polyester A | 9.8 | HFO | 0.01 | B | 5 | 5 |
| Example 2 | Sodium stearate | Saturated polyester A | 9.8 | HFO | 0.1 | B | 8 | 5 |
| Example 3 | Sodium stearate | Saturated polyester A | 9.8 | HFO | 1 | 2B | 10 | 5 |
| Example 4 | Sodium stearate | Saturated polyester A | 9.8 | HFO | 3 | 2B | 10 | 4 |
| Example 5 | Sodium stearate | Fluororesin A | 7.6 | MEK | 1 | F | 10 | 5 |
| Comparative Example 1 | - | Saturated polyester A | 9.8 | HFO | 0 | B | 2 | 5 |
| Comparative Example 2 | Calcium stearate | Saturated polyester A | 9.8 | HFO | 1 | 2B | 4 | 5 |
| Comparative Example 3 | Sodium stearate | Saturated polyester B | 11.9 | HFO | 1 | 3B | 7 | 3 |
| Comparative Example 4 | Sodium stearate | Nitrocellulose | 13.0 | Toluene | 1 | H | 6 | 2 |
| Comparative Example 5 | Sodium stearate | Fluororesin B | 6.7 | MEK | 1 | 3H | 4 | 5 |

In Table 1, P/B represents the weight ratio of the solid lubricant (alkaline soap) to the binder resin.

In addition, a main difference between saturated polyester A and saturated polyester B described in Table 1 is a hydroxyl value. That is, as the saturated polyester A, saturated polyester having a hydroxyl value of 10 [KOHmg/g] or less was used. In addition, as the saturated polyester B, saturated polyester having a hydroxyl value of about 100 [KOHmg/g] was used.

In addition, as a fluororesin A, a fluororesin having an average molecular weight of about 30,000 was used, and as a fluororesin B, a fluororesin having an average molecular weight of about 200,000 was used.

In addition, as the organic solvent, HFO, toluene, or MEK was used as described in Table 1.

### (Comparative Example 1)

Comparative Example 1 is a resin coating film 31 having an solubility parameter of 10.0 cal/cm³ or less. However, this is an example in which the resin coating film 31 does not contain an alkaline soap. Evaluation was performed based on the conditions of Comparative Example 1.

The resin coating film 31 of Comparative Example 1 had a pencil hardness of B. In Comparative Example 1, the rust prevention was 5 points, and there was no problem. However, the number of times of make-up/break-out was twice, and the evaluation was determined as a fail.

### (Examples 1 to 4)

Example 1 to 4 are tests in which sodium stearate was employed as the alkaline soap contained in the resin coating film 31, and the concentration influence was confirmed. In Examples 1 to 4, the pencil hardness was B or 2B.

As can be seen from Examples 1 to 4, when the P/B value indicating a proportion of the weight of the solid lubricant to the weight of the binder resin was in the range of 0.01 to 3, the number of times of make-up/break-out was all determined as a pass.

Here, even when a trace amount of alkaline soap is added, an effect of improving the galling resistance can be obtained. However, it is found that the addition amount of the alkaline soap may be increased to obtain a higher effect. This is because the lubricity of the alkaline soap reduces the damage of the solid lubrication coating film on the thread due to the backlash of Step 1.

On the other hand, it is also found that when the P/B value is increased to 3, the rust prevention is slightly lowered. This is considered to be because the amount of the additive was too large, and the dense and homogeneous resin coating film 31 was hardly formed.

From these results, it can be found that the P/B value may be 0.01 or more and 3 or less. The P/B value is preferably 0.1 or more and 2 or less, and more preferably 0.5 or more and 1.4 or less.

In view of this, P/B was set to 1 in the following Examples and Comparative Examples.

### (Comparative Example 2)

Comparative Example 2 is a test in which a metal soap, more specifically, calcium stearate was added instead of alkaline soap.

Comparative Example 2 had a pencil hardness of 2B, which was similar to Example 3.

In Comparative Example 2, the rust prevention was five points, and no problem was found. However, the number of times of make-up/break-out was four times. That is, in Comparative Example 2, the galling resistance was significantly reduced as compared with Example 3 in which an alkaline soap (sodium stearate) was added. This is because calcium stearate is dispersed in the resin coating film 31, and a stable soap layer is not formed as the film surface layer like sodium stearate.

### (Example 5)

Example 5 is an example in which a binder resin different from that in Examples 1 to 4 was selected. Specifically, a fluororesin having a lower solubility parameter (7.6 cal/cm³) and a slightly higher pencil hardness of (F) was used. As a result, both the number of times of make-up/break-out and the rust prevention were the highest as with Example 3.

### (Comparative Examples 3 and 4)

Comparative Examples 3 and 4 are examples in which the solubility parameter of the binder resin is high.

In Comparative Example 3, a saturated polyester resin different from that in Examples 1 to 4 was used. In addition, in Comparative Example 4, nitrocellulose was used. In addition, the solubility parameter of Comparative Example 3 was 11.9 cal/cm³, and the solubility parameter of Comparative Example 4 was 13.0 cal/cm³.

It was found that both of Comparative Examples 3 and 4 satisfied the pass criteria for the number of times of make-up/break-out, but had the same P/B value and were inferior to Example 3 having a low solubility parameter.

In addition, in Comparative Examples 3 and 4, the rust prevention was rated as a fail with 3 points and 2 points, respectively.

Consequently, it has been found that when the solubility parameter of the binder resin is too high, the galling resistance and the rust prevention deteriorate. From the comparison with Examples, it is estimated that good galling resistance and rust prevention can be obtained when the content is about 10.0 cal/cm³ or less.

Further, in Comparative Example 4, the pencil hardness of the resin coating film 31 may be considerably higher than that in Example 3. That is, the resin coating film 31 that is too strong is considered to have a possibility of inhibiting slippage of the alkaline soap layer 31A.

### (Comparative Example 5)

Comparative Example 5 is an example in which the pencil hardness of the resin coating film 31 is high. In Comparative Example 5, the pencil hardness of 3H was realized by adopting a fluororesin different from that of Example 5. In Comparative Example 5, the solubility parameter was 6.7 cal/cm³, which was very low as in Example 5, but the number of times of make-up/break-out was only 4 times. From this, it was also found that the lubrication effect of the alkaline soap layer 31A cannot be sufficiently obtained unless the pencil hardness of the resin coating film 31 is suppressed to be low. From the results of Example 5, it is considered that the pencil hardness should be F or less.

Here, the entire contents of Japanese Patent Application No. 2022-134377 (filed on August 25, 2022), the priority of which is claimed by the present application, are incorporated herein by reference. Here, the description has been provided with reference to a limited number of embodiments, but the scope of rights is not limited thereto, and modifications of each embodiment based on the above-described disclosure are obvious to those skilled in the art.

### Reference Signs List

- 1: pin
- 1a: male thread
- 2: box (coupling)
- 2a: female thread
- 3: weight
- 3A: main weight body
- 4: power tong
- 12: penetration bar
- 13: insertion bar
- 20: lifting device (crane)
- 21: chain (suspension line)
- 30: another solid lubrication coating film
- 31: resin coating film
- 31A: alkaline soap layer

## Claims

1. Oil country tubular goods constituting a box or a pin used for a threaded joint for oil country tubular goods, the threaded joint formed by connecting the box having a female thread and the pin having a male thread, the oil country tubular goods comprising:
a resin coating film containing an alkaline soap as a solid lubricant in a binder resin, as an outermost layer of a thread portion,
wherein the resin coating film has a surface on which an alkaline soap layer is formed.

2. The oil country tubular goods according to claim 1,
wherein the resin coating film has the alkaline soap layer made of the contained alkaline soap which has become concentrated on the surface side.

3. The oil country tubular goods according to claim 1 or 2, wherein the binder resin has a solubility parameter value of 10.0 cal/cm³ or less.

4. The oil country tubular goods according to any one of claims 1 to 3, wherein a weight of the alkaline soap is 0.01 times or more and 3 times or less a weight of the binder resin.

5. The oil country tubular goods according to any one of claims 1 to 4, wherein the resin coating film has a pencil hardness of F or less.

6. The oil country tubular goods according to any one of claims 1 to 5, wherein another solid lubrication coating film is provided as an underlayer with respect to the resin coating film.

7. A threaded joint for oil country tubular goods, the threaded joint formed by connecting a box having a female thread and a pin having a male thread,
wherein at least one of the box and the pin is made of the oil country tubular goods according to any one of claims 1 to 6.

8. A coating material for forming an outermost layer on a thread portion for oil country tubular goods, the coating material comprising:
a solvent; a binder resin; and a solid lubricant,
wherein, as the solid lubricant, an alkaline soap is added,
wherein the binder resin has a solubility parameter of 10.0 cal/cm³ or less and an average molecular weight of 10,000 or more and 300,000 or less, and
wherein a weight of the alkaline soap is 0.01 times or more and 3 times or less a weight of the binder resin.
